# EUROPEAN PATENT SPECIFICATION

(11) **EP 2 538 090 B1**
(45) Date of publication and mention of the grant of the patent: **20.04.2016**
(21) Application number: 11742147.9
(22) Date of filing: 01.02.2011
(51) Int. Cl.: F15B 15/14, F16J 9/00, F16J 15/18

(54) **FLUID PRESSURE CYLINDER**
FLÜSSIGKEITSDRUCKZYLINDER
VÉRIN À PRESSION DE FLUIDE

(30) Priority: 15.02.2010 JP 2010029882
(43) Date of publication of application: 26.12.2012
(73) Proprietor: KYB Corporation, Tokyo 105-6111 (JP)
(72) Inventor: FUNATO, Hiroshi, Tokyo 105-6111 (JP)
(74) Representative: Grünecker Patent- und Rechtsanwälte PartG mbB
(86) International application number: PCT/JP2011/052063
(87) International publication number: WO 2011/099402

(56) References cited:
- EP-A2- 1 985 895
- DE-A1-102007 051 414
- JP-U- 56 087 604
- JP-U- 56 087 604
- JP-U- 58 070 504
- JP-U- 59 098 157
- JP-U- 59 098 157
- US-A- 4 003 297
- US-A- 4 207 800

## Description

### FIELD OF THE INVENTION

This invention relates to a sealing structure for a piston accommodated in a fluid pressure cylinder.

### BACKGROUND OF THE INVENTION

A sealing ring that slides against a cylinder tube is attached to a piston that is accommodated in a fluid pressure cylinder so as to define an oil chamber within the fluid pressure cylinder. For this purpose, a ringshaped accommodation groove that holds the sealing ring is formed in an outer periphery of the piston.

To attach the sealing ring to the piston, a diameter of the sealing ring is increased using an attachment jig, whereupon the sealing ring is guided into the accommodation groove along the outer periphery of the piston. Having reached a periphery of the accommodation groove, the diameter of the sealing ring is reduced using a correction jig, whereby the sealing ring is fitted into the accommodation groove.

Hence, the sealing ring is attached to the piston using a plurality of jigs, and therefore an increase in a number of steps required to assemble the piston is unavoidable.

### SUMMARY OF THE INVENTION

JP62-016865U, published by the Japan Patent Office in 1987, proposes simplifying attachment of the sealing ring by dividing the piston.

According to this proposal, attachment of the sealing ring is simplified, but the structure of the piston becomes more complicated.

Furthermore JP S 56-087604 U proposes a sealing for a piston inside a circular cylinder, arranging a sealing and a symmetrical arrangement of two bearing rings on each side of the sealing ring contacting the inner surface of the cylinder. a further embodiment teaches additional bearing rings provided on each side of the sealing and additional backup rings between the bearing rings and the sealing ring.

It is therefore an object of this invention to simplify attachment of a sealing ring to a piston without complicating the structure of the piston.

In order to achieve this object, a fluid pressure cylinder according to this invention comprises a cylinder tube having a central axis and an inner peripheral surface that is cylindrical about the central axis, a piston that is accommodated in the cylinder tube, slides against the inner peripheral surface of the cylinder tube and defines a fluid chamber within the cylinder tube, a sealing ring held in a sealing ring accommodation groove formed in a circumferential direction in an outer peripheral surface of the piston, a piston ring that is held in a piston ring accommodation groove formed in the circumferential direction in the outer peripheral surface of the piston and comprises a fractured portion with which a diameter thereof can be increased and reduced, and a backup ring that is attached to an outer periphery of the piston between the sealing ring and the piston ring such that respective ends thereof relative to the central axis direction contact the sealing ring and the piston ring.

The details as well as other features and advantages of this invention are set forth in the remainder of the specification and are shown in the accompanying drawings.

### BRIEF DESCRIPTION OF THE DRAWINGS

FIG. 1 is a longitudinal sectional view including a partial side view of a hydraulic cylinder according to a first embodiment of this invention.
FIG. 2 is a longitudinal sectional view of main parts of the hydraulic cylinder.
FIG. 3 is an enlarged longitudinal sectional view of main parts of a piston according to the first embodiment of this invention.
FIG. 4 is a perspective view of a fractured portion of a piston ring according to the first embodiment of this invention.

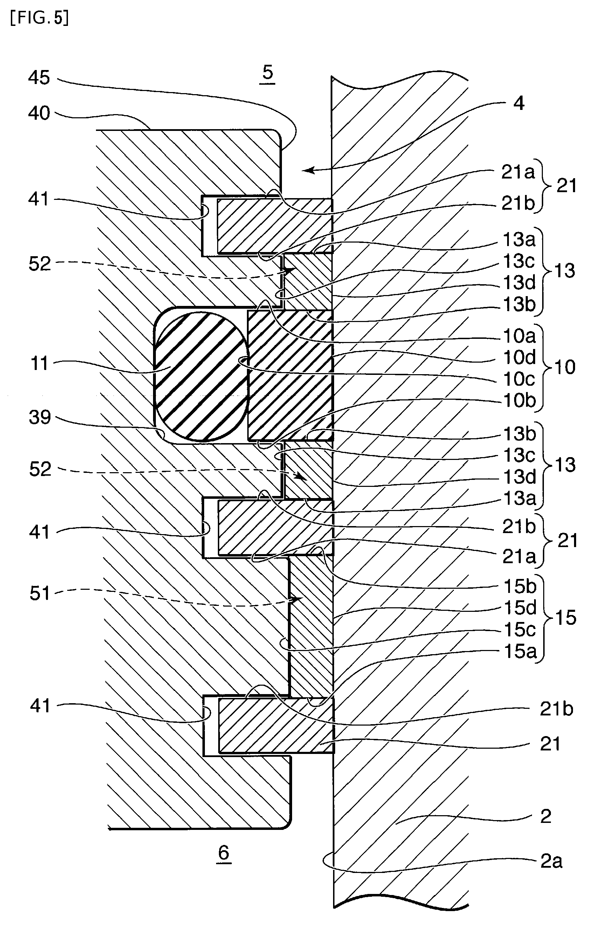

FIG. 5 is a longitudinal sectional view of main parts of a hydraulic cylinder according to a second embodiment of this invention.

### DESCRIPTION OF THE PREFERRED EMBODIMENTS

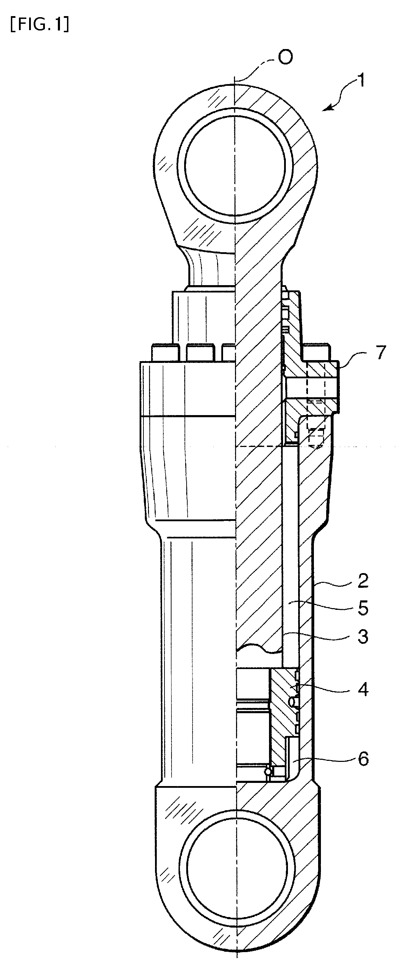

Referring to FIG. 1 of the drawings, a hydraulic cylinder 1 that uses oil as a working fluid comprises a cylinder tube 2, a piston 4 accommodated inside the cylinder tube 2 to be capable of sliding, and a piston rod 3 that is joined to the piston 4 so as to project from the cylinder tube 2 in an axial direction. The piston rod 3 projects to an exterior of the cylinder tube 2 so as to be free to slide via a cylinder head 7 provided on an open end of the cylinder tube 2.

The hydraulic cylinder 1 is used as an actuator in a construction machine or an operating machine, for example. A replacement aqueous fluid or gas may be used instead of oil as the working fluid.

The cylinder tube 2, the piston rod 3, the piston 4, and the cylinder head are disposed coaxially relative to a central axis O of the cylinder tube 2 and the piston 4.

An interior of the cylinder tube 2 is divided by the piston 4 into a piston rod side oil chamber 5 and an opposite side oil chamber 6. The oil chambers 5 and 6 are respectively connected to an oil pressure source via pipes. The hydraulic cylinder 1 performs a contraction operation in response to a supply of working oil from the oil pressure source to the oil chamber 5 and performs an expansion operation in response to a supply of working oil from the oil pressure source to the oil chamber 6.

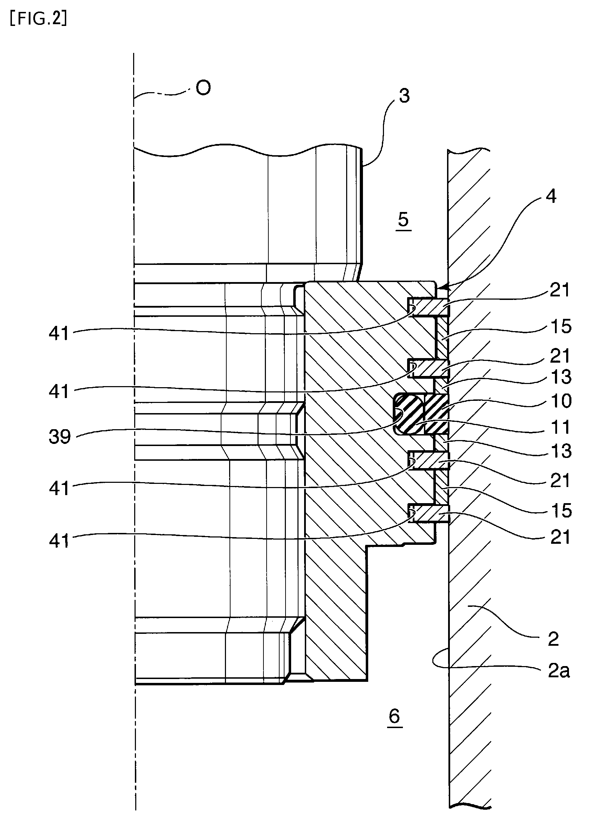

Referring to FIG. 2, various rings that slide against an inner peripheral surface 2a of the cylinder tube 2 are attached to an outer periphery of the piston 4. More specifically, a piston ring 21, a bearing ring 15, a piston ring 21, a backup ring 13, a sealing ring 10, a backup ring 13, a piston ring 21, a bearing ring 15, and a piston ring 21 are disposed in that order from a top to a bottom of the figure.

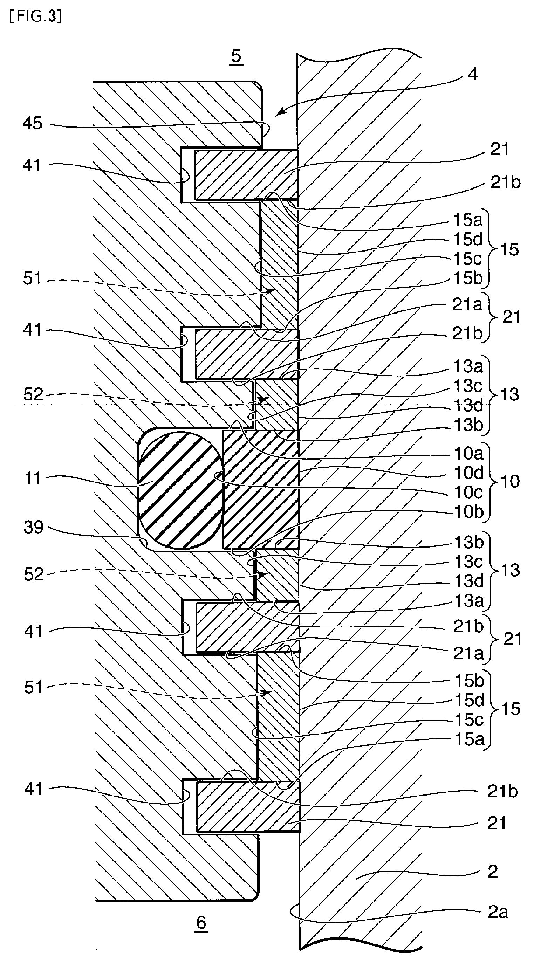

Referring to FIG. 3, four piston ring accommodation grooves 41 are formed in parallel in an outer peripheral surface 45 of the piston 4 so as to be continuous in a circumferential direction. The piston rings 21 are inserted into the piston ring accommodation grooves 41.

The piston rings 21 are constructed using a metal such as a steel material, and have a rectangular cross-section.

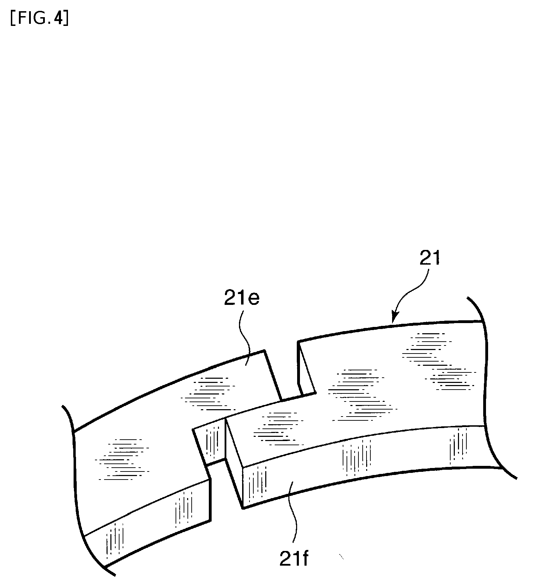

Referring to FIG. 4, the piston ring 21 comprises a fractured portion in a single location thereof. The fractured portion is constituted by end portions 21e and 21f of the piston ring 21. The end portions 21e and 21f respectively comprise L-shaped cutouts. By inserting the end portion 21f into the cutout on the end portion 21e and inserting the end portion 21e into the cutout on the end portion 21f, the end portions 21e and 21f overlap while remaining physically fractured. An amount of overlap varies in accordance with expansion and contraction of the piston ring 21. The overlap prevents a gap from forming between the end portions 21e and 21f, and therefore secures a continuity of the piston ring 21.

The fractured portion of the piston ring 21 is not limited to the shape described above, and other shapes, including a bias cut, may be employed.

The piston rings 21 are inserted into the respective piston ring accommodation grooves 41 in a state where the fractured portion is expanded, or in other words a state where the overlap between the end portions 21e and 21f is small. The piston rings 21 are then fitted to the piston ring accommodation grooves 41 by contracting the fractured portion. According to this attachment structure, the piston 4 need not be divided, and the piston rings 21 can be fitted to the piston ring accommodation grooves 41 easily.

Referring back to FIG. 3, the piston ring 21 comprises an inner peripheral portion that is fitted to the piston ring accommodation groove 41, and an outer peripheral portion that projects from the piston ring accommodation groove 41 toward the inner peripheral surface 2a of the cylinder tube 2.

The outer peripheral portion of the piston ring 21 is caused to contact the inner peripheral surface 2a of the cylinder tube 2 around the entire circumference thereof by an elastic restoring force exerted in a direction for widening the fractured portion, or in other words a diameter increasing direction. This contact between the piston ring 21 and the inner peripheral surface 2a of the cylinder tube 2 enables the piston ring 21 to function as a contamination sealing ring that prevents contamination matter contained in the working oil from infiltrating a sliding contact portion between the sealing ring 10 and the inner peripheral surface 2a of the cylinder tube 2. The piston ring 21 also realizes a buffering function for ensuring that a high pressure generated in the piston rod side oil chamber 5 or the opposite side oil chamber 6 is not exerted directly on the sealing ring 10.

The bearing rings 15 are constituted by synthetic resin such as polyimide resin, and have a rectangular cross-section. The bearing rings 15 are formed as continuous rings not having a fractured portion, and are fitted to the outer periphery of the piston 4. An outer peripheral surface 15d of the bearing ring 15 contacts the inner peripheral surface 2a of the cylinder tube 2, thereby supporting the piston 4 to be capable of sliding relative to the cylinder tube 2. A fractured portion may be provided likewise in the bearing ring 15.

The bearing rings 15 are disposed respectively between the piston rings 21. One end surface 15a of the bearing ring 15 contacts an inwardly oriented end surface 21b of the piston rings 21 on an upper end and a lower end of the figure, while another end surface 15b of the bearing ring 15 contacts an end surface 21a located on an opposite side to the sealing ring 10 of the piston rings 21 positioned close to the sealing ring 10. An inner peripheral surface 15c of the piston ring 21 contacts the outer peripheral surface 45 of the piston 4.

As a result, an annular bearing ring accommodation portion 51 for accommodating the bearing ring 15 is defined by the end surface 21b of one piston ring 21, the end surface 21a of another piston ring 21, and the outer peripheral surface 45 of the piston 4.

Hence, each bearing ring 15 is sandwiched from above and below in the figure by two piston rings 21. The two piston rings 21 serve to restrict displacement of the bearing ring 15 relative to the piston 4 in a central axis O direction of the cylinder tube 2.

A single annular sealing ring accommodation groove 39 is formed in a center of the outer peripheral surface 45 of the piston 4 so as to be positioned between the upper two piston ring accommodation grooves 41 and the lower two piston ring accommodation grooves 41 in the figure. An O-ring 11 and the sealing ring 10 are inserted into the sealing ring accommodation groove 39.

The O-ring 11 is constructed using an elastically deforming material such as rubber, for example, and has a circular cross-sectional shape. The O-ring 11 is formed as a continuous ring not having a fractured portion. The O-ring 11 is disposed on an inner side, or in other words the central axis O side, of the sealing ring 10 within the sealing ring accommodation groove 39. An elastic restoring force of the O-ring 11 presses an inner peripheral surface 10c of the sealing ring 10, and as a result, the sealing ring 10 is biased toward an outer side.

The sealing ring 10 is constituted by a synthetic resin material such as polytetrafluoroethylene (PTFE), and has a rectangular cross-section. The sealing ring 10 is formed as a continuous ring not having a fractured portion. The sealing ring 10 comprises a fitted portion that is fitted into the sealing ring accommodation groove 39, and a projecting portion that projects outward from the sealing ring accommodation groove 39. An outer peripheral surface 10d of the projecting portion of the sealing ring 10 contacts the inner peripheral surface 2a of the cylinder tube 2 around the entire circumference thereof, whereby the sealing ring 10 serves to cut off the piston rod side oil chamber 5 from the opposite side oil chamber 6.

The backup rings 13 are interposed respectively between the two piston rings 21 close to the sealing ring 10 and the sealing ring 10. The backup rings 13 are formed as continuous rings not having a fractured portion, and have a rectangular cross-section. A fractured portion may be provided likewise in the backup rings 13.

The backup ring 13 is formed to have a smaller radial direction thickness than the sealing ring 10.

One end surface 13a of the backup ring 13 contacts the end surface 21b of the piston ring 21, and another end surface 13b of the backup ring 13 contacts an end surface 10a or 10b of the sealing ring 10. An inner peripheral surface 13c of the backup ring 13 contacts the outer peripheral surface 45 of the piston 4, and an outer peripheral surface 13d of the backup ring 13 contacts the inner peripheral surface 2a of the cylinder tube 2.

In other words, an annular backup ring accommodation portion 52 for accommodating the backup ring 13 is defined by the end surface 21b of the piston ring 21 close to the sealing ring 10, the end surface 10a or 10b of the sealing ring 10, and the outer peripheral surface 45 of the piston 4.

By having the end surface 13b of the backup ring 13 contact the end surface 10a or 10b of the sealing ring 10, the backup ring 13 serves to suppress deformation of an outer peripheral edge of the sealing ring 10. The radial direction thickness of the backup ring 13 may be set to be equal to a thickness of the bearing ring 15. A load exerted parallel to the central axis O on the sealing ring 10 during an operation of the hydraulic cylinder 1 is supported by the piston rings 21 via the backup rings 13.

The piston 4 having the sealing structure described above is assembled in a following sequence, for example.

(1) The O-ring 11 and the sealing ring 10 are inserted into the sealing ring accommodation groove 39 of the piston 4.

The O-ring 11, which is constituted by an elastically deforming material, is increased in diameter by elastic deformation and passed over the outer periphery of the piston 4 in this condition until it reaches the sealing ring accommodation groove 39. The diameter of the O-ring 11 is then reduced due to the elastic restoring force thereof, whereby the O-ring 11 is fitted to the sealing ring accommodation groove 39.

The sealing ring 10, which is constituted by a synthetic resin material, is likewise increased in diameter mainly by elastic deformation and passed over the outer periphery of the piston 4 in this condition until it is fitted to the sealing ring accommodation groove 39. At this stage, the piston rings 21 are not attached to the piston 4, and therefore the diameter of the sealing ring 10 does not have to be increased greatly in order to pass the sealing ring 10 over the piston rings 21. The assembly sequence is preferably set in this way to prevent plastic deformation of the sealing ring 10 when the diameter thereof is increased. According to this process, a step of reducing the diameter of the sealing ring 10 using a correction jig is not required when the sealing ring 10 is attached to the sealing ring accommodation groove 39.

(2) The two backup rings 13 are fitted to the outer peripheral surface 45 of the piston 4 so as to contact the end surfaces 10a and 10b of the sealing ring 10, respectively.

(3) Two of the piston rings 21 are inserted respectively into the two piston ring accommodation grooves 41 on the sealing ring side by widening the respective fractured portions of the piston rings 21 and passing the piston rings 21 over the outer periphery of the piston 4 until the piston rings 21 are respectively adjacent to the two backup rings 13. Thereafter, the two piston rings 21 function as members for retaining and supporting the backup rings 13.

(4) The two bearing rings 15 are respectively fitted to the outer peripheral surface 45 of the piston 4 so as to contact the respective piston rings 21.

(5) The respective fractured portions of the remaining two piston rings 21 are widened, and in this condition, the piston rings 21 are attached respectively to the two piston ring accommodation grooves 41 disposed at a remove from the sealing ring 10. These two piston rings 21 function as members for retaining and supporting the bearing rings 15.

It should be noted that the procedure for assembling the piston 4 is not limited to that described above. For example, the piston ring 21, the bearing ring 15, the piston ring 21, the backup ring 13, the sealing ring 10, the backup ring 13, the piston ring 21, the bearing ring 15, and the piston ring 21 may be attached to the piston 4 in that order from the top or the bottom of FIG. 3. Likewise in this case, the sealing ring 10 does not have to pass over other rings when being attached to the piston 4, and therefore deformation occurring when the diameter of the sealing ring 10 is increased can be minimized.

The piston rings 21 function as follows:
- as a member to define the backup ring accommodation portion 52;
- as contamination sealing rings that prevent contamination matter contained in the working oil from infiltrating the contact portion between the sealing ring 10 and the inner peripheral surface 2a of the cylinder tube 2;
- as a member to suppress infiltration of air bubbles in the working oil into the contact portion between the sealing ring 10 and the inner peripheral surface 2a of the cylinder tube 2, thereby preventing damage to the sealing ring 10 caused when the working oil is burned by heat of compression from the air bubbles; and
- as buffer rings that prevent the high pressure generated in the piston rod side oil chamber 5 or the opposite side oil chamber 6 from acting directly on the sealing ring 10.

According to the sealing structure described above, there is no need to provide accommodation grooves for the backup rings 13, independent contamination sealing rings, and independent buffer rings. By eliminating the need for accommodation grooves for the backup rings 13, a diameter of the piston 4 can be reduced relative to the diameter of the sealing ring 10 by an amount corresponding to a depth of the accommodation grooves. As a result, a number of cutting steps implemented on the piston 4 to form the accommodation grooves is reduced.

Further, a gap between the outer peripheral surface 45 of the piston 4 and the inner peripheral surface 2a of the cylinder tube 2 can be increased such that when a load is exerted on the piston 4 in a lateral direction, the outer peripheral surface 45 of the piston 4 is less likely to collide with the inner peripheral surface 2a of the cylinder tube 2.

Furthermore, when the diameter of the piston 4 is reduced, a depth by which the sealing ring 10 is fitted to the sealing ring accommodation groove 39 becomes shallower, and therefore the amount of deformation applied to the sealing ring 10 in order to increase the diameter thereof during attachment to the piston 4 can be reduced correspondingly. When the amount of deformation applied to increase the diameter is reduced, the need for an operation to reduce the diameter of the sealing ring 10 using a dedicated correction jig during attachment of the sealing ring to the sealing ring accommodation groove 39 can be eliminated. As a result, attachment of the sealing ring 10 to the piston 4 is simplified.

The continuous bearing ring 15 not having a fractured portion is simply fitted to the outer periphery of the piston 4, and therefore the diameter of the bearing ring 15 does not have to be increased in order to attach the bearing ring 15 to the piston 4.

Referring to FIG. 4, another embodiment of this invention will be described.

The piston 4 according to this embodiment differs from the piston 4 of the first embodiment in that the piston ring 21 and the bearing ring 15 close to the piston rod side oil chamber 5 have been omitted.

The piston ring 21, the backup ring 13, the sealing ring 10, the backup ring 13, the piston ring 21, the bearing ring 15, and the piston ring 21 are disposed between the outer peripheral surface 45 of the piston 4 and the inner peripheral surface 2a of the cylinder tube 2 in that order from a top to a bottom of the figure.

In this embodiment, the piston 4 slides against the cylinder tube 2 via the single bearing ring 15, and therefore a dimension of the piston 4 in the central axis O direction of the cylinder tube 2 can be reduced, enabling an increase in an effective stroke of the hydraulic cylinder 1.

Although the invention has been described above with reference to certain embodiments, the invention is not limited to the embodiments described above. Modifications and variations of the embodiments described above will occur to those skilled in the art, within the scope of the claims.

For example, in the above embodiments, this invention is applied to the piston 4 of the double acting hydraulic cylinder 1, but the invention may also be applied to a single acting fluid pressure cylinder. In a single acting fluid pressure cylinder, only one of the piston rod side oil chamber and the opposite side oil chamber is filled with a pressurized working fluid, and therefore the backup ring need only be provided on one side of the sealing ring on the piston of the single acting fluid pressure cylinder.

### INDUSTRIAL FIELD OF APPLICATION

The fluid pressure cylinder according to this invention may be used in a hydraulic device, a pneumatic device, and so on of a construction machine or an operating machine.

The embodiments of this invention in which an exclusive property or privilege is claimed are defined as follows:

## Claims

1. A fluid pressure cylinder (1) comprising:
a cylinder tube (2) having a central axis (O) and an inner peripheral surface (2a) that is cylindrical about the central axis (O);
a piston (4) that is accommodated in the cylinder tube (2), slides against the inner peripheral surface (2a) of the cylinder tube (2), and defines a fluid chamber (5, 6) within the cylinder tube (2); and
a sealing ring (10) held in a sealing ring accommodation groove (39) formed in a circumferential direction in an outer peripheral surface of the piston (4);
a backup ring (13) that is attached to an outer peripheral surface (45) of the piston (4); and
a bearing ring (15);
**characterized by**
a pair of piston ring accommodation grooves (41) formed respectively in the circumferential direction in the outer peripheral surface (45) of the piston (4) on one side of the sealing ring (10) with respect to a direction of the central axis (O), the pair of the piston ring accommodation grooves (41) comprising a first groove and a second groove that is located farer from the sealing ring (10) than the first groove;
a first piston ring (21) held in the first piston ring accommodation groove (41), the first piston ring (21) comprising a fractured portion with which a diameter thereof can be increased and reduced;
a second piston ring (21) held in the second piston ring accommodation groove (41), the second piston ring (21) comprising a fractured portion with which a diameter thereof can be increased and reduced;
said backup ring (13) being attached between the sealing ring (10) and the first piston ring (21), the respective ends (13a, 13b) of the backup ring (13) relative to the direction of the central axis (O) respectively contacting the sealing ring (10) and the first piston ring (21) such that the backup ring (13) is accommodated in an annular backup ring accommodation portion (52) defined by an end surface (21 b) of the piston ring (21) close to the sealing ring (10), an end surface (10a, 10b) of the sealing ring (10) and the outer peripheral surface (45) of the piston (4);
said bearing ring (15) being attached to the outer peripheral surface (45) of the piston (4) between the first and the second piston rings (21), the respective ends (15a, 15b) of the bearing ring (15) relative to the direction of the central axis (O) respectively contacting the first and second piston rings (21) such that the bearing ring (15) is accommodated in an annular bearing ring accommodation portion (51) defined by an end surface (21 b) of one piston ring (21), an end surface (21a) of another piston ring (21) and the outer peripheral surface (45) of the piston (4).

2. The fluid pressure cylinder (1) according to Claim 1, **characterized in that** it further comprises a third piston ring accommodation groove (41) formed on an opposite side of the sealing ring (10) to the first and second piston rings (21), a third piston ring (21) held in the third piston ring accommodation groove (41), and another backup ring (13) that is attached to the outer peripheral surface (45) of the piston (4) between the sealing ring (10) and the third piston ring (21).

3. The fluid pressure cylinder (1) according to Claim 1, **characterized in that** the first and second piston ring accommodation grooves (41), the first and second piston rings (21), the backup ring (13), and the bearing ring (15) are provided on both sides of the sealing ring (10) relative to the direction of the central axis (O).

## Patentansprüche

1. Fluiddruck-Zylinder (1), der umfasst:
eine Zylinderröhre (2), die eine Mittelachse (0) sowie eine Innenumfangsfläche (2a) hat, die einen Zylinder um die Mittelachse (O) herum bildet;
einen Kolben (4), der in der Zylinderröhre (2) aufgenommen ist, an der Innenumfangsfläche (2a) der Zylinderröhre (2) gleitet und eine Fluidkammer (5, 6) im Inneren der Zylinderröhre (2) bildet; sowie
einen Dichtungsring (10), der in einer Dichtungsring-Aufnahmenut (39) gehalten wird, die in einer Umfangsrichtung in einer Außenumfangsfläche des Kolbens (4) ausgebildet ist;
einen Stützring (13), der an einer Außenumfangsfläche (45) des Kolbens (4) angebracht ist; und
einen Lagerring (15);
**gekennzeichnet durch**
ein Paar Kolbenring-Aufnahmenuten (41), die jeweils in der Umfangsrichtung in der Außenumfangsfläche (45) des Kolbens (4) an einer Seite des Dichtungsrings (10) in Bezug auf eine Richtung der Mittelachse (0) ausgebildet sind, wobei das Paar der Kolbenring-Aufnahmenuten (41) eine erste Nut und eine zweite Nut, die weiter von dem Dichtungsring (10) entfernt ist als die erste Nut, umfasst;
einen ersten Kolbenring (21), der in der ersten Kolbenring-Aufnahmenut (41) gehalten wird, wobei der erste Kolbenring (21) einen Spaltabschnitt umfasst, mit dem sein Durchmesser vergrößert und verkleinert werden kann;
einen zweiten Kolbenring (21), der in der zweiten Kolbenring-Aufnahmenut (41) gehalten wird, wobei der zweite Kolbenring (21) einen Spaltabschnitt umfasst, mit dem sein Durchmesser vergrößert und verkleinert werden kann;
wobei der Stützring (13) zwischen dem Dichtungsring (10) und dem ersten Kolbenring (21) angebracht ist, die jeweiligen Enden (13a, 13b) des Stützrings (13) relativ zu der Richtung der Mittelachse (O) mit dem Dichtungsring (10) bzw. dem ersten Kolbenring (21) so in Kontakt kommen, dass der Stützring (13) in einem ringförmigen Stützring-Aufnahmeabschnitt (52) aufgenommen wird, der **durch** eine Endfläche (21b) des Kolbenrings (21) nahe an dem Dichtungsring (14), eine Endfläche (10a, 10b) des Dichtungsrings (10) und die Außenumfangsfläche (45) des Kolbens (4) gebildet wird;
wobei der Lagerring (15) an der Außenumfangsfläche (45) des Kolbens zwischen dem ersten und dem zweiten Kolbenring (21) angeordnet ist, die jeweiligen Enden (15a, 15b) des Lagerrings (15) relativ zu der Richtung der Mittelachse (O) mit dem ersten bzw. dem zweiten Kolbenring (21) so in Kontakt kommen, dass der Lagerring (15) in einem ringförmigen Lagerring-Aufnahmeabschnitt (51) aufgenommen ist, der **durch** eine Endfläche (21b) eines Kolbenrings (21), eine Endfläche (21a) eines anderen Kolbenrings (21) sowie die Außenumfangsfläche (45) des Kolbens (4) gebildet wird.

2. Fluiddruck-Zylinder (1) nach Anspruch 1, **dadurch gekennzeichnet, dass** er des Weiteren eine dritte Kolbenring-Aufnahmenut (41), die an einer dem ersten und dem zweiten Kolbenring (21) gegenüberliegenden Seite des Dichtungsrings (10) ausgebildet ist, sowie einen weiteren Stützring (13) umfasst, der an der Außenumfangsfläche (45) des Kolbens (4) zwischen dem Dichtungsring (10) und dem dritten Kolbenring (21) angebracht ist.

3. Fluiddruck-Zylinder (1) nach Anspruch 1, **dadurch gekennzeichnet, dass** die erste und die zweite Kolbenring-Aufnahmenut (41), der erste und der zweite Kolbenring (21), der Stützring (13) sowie der Lagerring (15) an beiden Seiten des Dichtungsrings (14) relativ zu der Richtung der Mittelachse (0) angeordnet sind.

## Revendications

1. Vérin à pression de fluide (1) comprenant :
un tube cylindrique (2) ayant un axe central (O) et une surface périphérique intérieure (2a) qui est cylindrique autour de l'axe central (O) ;
un piston (4) qui est reçu dans le tube cylindrique (2), coulisse contre la surface périphérique intérieure (2a) du tube cylindrique (2) et définit une chambre de fluide (5, 6) dans le tube cylindrique (2) ; et
une bague d'étanchéité (10) maintenue dans une rainure de réception de gorge de scellement (39) formée dans la direction circonférentielle dans la surface périphérique extérieure du piston (4) ;
une bague d'appui (13) qui est fixée à la surface périphérique extérieure (45) du piston (4) ; et
une bague de palier (15) ;
**caractérisé par**
une paire de rainures de réception de segment de piston (41) respectivement formées dans la direction circonférentielle de la surface périphérique extérieure (45) du piston (4) sur un côté de la bague d'étanchéité (10) par rapport à la direction de l'axe central (O), la paire de rainures de réception de segment de piston (41) comprenant une première rainure et une deuxième rainure qui est située plus loin de la bague d'étanchéité (10) que la première rainure ;
un premier segment de piston (21) maintenu dans la première rainure de réception de segment de piston (41), le premier segment de piston (21) comprenant une partie fracturée grâce à laquelle son diamètre peut être augmenté et réduit ;
un deuxième segment de piston (21) maintenu dans la deuxième rainure de réception de segment de piston (41), le deuxième segment de piston (21) comprenant une partie fracturée grâce à laquelle son diamètre peut être augmenté et réduit ;
ladite bague d'appui (13) étant fixée entre la bague d'étanchéité (10) et le premier segment de piston (21) les extrémités respectives (13a, 13b) de la bague d'appui (13) par rapport à la direction de l'axe central (O) étant respectivement en contact avec la bague d'étanchéité (10) et le premier segment de piston (21) de sorte que la bague d'appui (13) est reçue dans une partie de réception de bague d'appui annulaire (52) définie par une surface d'extrémité (21b) du segment de piston (21) proche de la bague d'étanchéité (10), une surface d'extrémité (10a, 10b) de la bague d'étanchéité (10) et la surface périphérique extérieure (45) du piston (4) ;
ladite bague de palier (15) étant fixée à la surface périphérique extérieure (45) du piston (4) entre le premier et le deuxième segment de piston (21), les extrémités respectives (15a, 15b) de la bague de palier (15) par rapport à la direction de l'axe central (O) étant respectivement en contact avec les première et deuxième bagues de piston (21), de sorte que la bague de palier (15) est reçue dans une partie de réception de bague de palier annulaire (51) définie par une surface d'extrémité (21b) d'un segment de piston (21), une surface d'extrémité (21a) d'un autre segment de piston (21) et la surface périphérique extérieure (45) du piston (4).

2. Vérin à pression de fluide (1) selon la revendication 1, **caractérisé en ce qu'**il comprend en outre une troisième rainure de réception de segment de piston (41) formée sur un côté de la bague d'étanchéité (10) opposé aux premier et deuxième segments de piston (21), un troisième segment de piston (21) maintenu dans la troisième rainure de réception de segment de piston (41) et une autre bague d'appui (13) qui est fixée à la surface périphérique extérieure (45) du piston (4) entre la bague d'étanchéité (10) et le troisième segment de piston (21).

3. Vérin à pression de fluide (1) selon la revendication 1, **caractérisé en ce que** les première et deuxième rainures de réception de segment de piston (41), les premier et deuxième segments de piston (21), la bague d'appui (13) et la bague de palier (15) sont prévues des deux côtés de la bague d'étanchéité (10) par rapport à la direction de l'axe central (O).
